# EUROPÄISCHE PATENTSCHRIFT

(11) **EP 0 605 777 B1**
(45) Veröffentlichungstag und Bekanntmachung des Hinweises auf die Patenterteilung: **14.05.1997**
(21) Anmeldenummer: 93118505.2
(22) Anmeldetag: 16.11.1993
(51) Int. Cl.: C02F 1/40, E03F 5/16, B01D 17/02

(54) **Flüssigkeitsabscheider**
Liquid separator
Séparateur de liquide

(30) Priorität: 06.01.1993 DE 9300075 U
(43) Veröffentlichungstag der Anmeldung: 13.07.1994
(73) Patentinhaber: Benkeser, Michael, Dipl.-Ing. (FH), D-77886 Lauf (DE)
(72) Erfinder: Benkeser, Michael, Dipl.-Ing. (FH), D-77886 Lauf (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 512 538
- DE-A- 4 200 379
- FR-A- 2 666 322
- US-A- 4 089 784
- US-A- 5 143 611

## Beschreibung

Die Erfindung betrifft einen Flüssigkeitsabscheider insbesondere zum Trennen von Gemischen aus Wasser und spezifisch leichteren Flüssigkeiten wie Öl, Benzin oder dergleichen, mit einen Behälter, der einen Einlauf und einen Ablauf aufweist, einem im Flüssigkeitsabscheider ausgebildeten Abscheiderbereich und einem die im Abscheiderbereich abgeschiedene Flüssigkeit aufnehmenden Auffangbehälter, der in dem Behälter des Flüssigkeitsabscheiders angeordnet ist.

Um den heutigen strengen Abwasservorschriften genügen zu können, werden Flüssigkeitsabscheider zum Trennen von Öl- oder Benzin-Wasser-Gemischen eingesetzt. Dabei wird durch die physikalischen Vorgänge der Sedimentation sowie des Aufschwimmens bei sogenannten Schwerkraftabscheidern bzw. der Sedimentation, des Aufschwimmens, der Flotation, der Adsorption sowie aufgrund von Auftriebskräften in sogenannten Koalenszenzabscheidern, bei denen Koaleszenzfilter eingesetzt werden, erreicht, daß verunreinigte Abwässer in einem Flüssigkeitsabscheider gereinigt werden können. Bei der Reinigung von beispielsweise ölbelasteten Abwässern schwimmt das Öl in dem Flüssigkeitsabscheider zu einer oberen Schicht auf, während das gesäuberte Wasser über einen Ablauf aus dem Flüssigkeitsabscheider abfließen kann. Der Ölfilm, der sich im Laufe der Zeit an der Oberfläche der im Abscheiderbereich des Flüssigkeitsabscheiders befindlichen Flüssigkeit bildet, kann je nach Art des Flüssigkeitsabscheiders eine Dicke von 5 cm bis 50 cm erreichen.

Wenn die Ölschicht auf eine vorbestimmte Dicke angewachsen ist, ist es notwendig, das abgeschiedene Öl aus dem Flüssigkeitsabscheider zu entfernen. Zu diesem Zweck wird das Öl üblicherweise mit Hilfe einer externen Saugvorrichtung, beispielsweise einen sogenannten Saugwagen, zusammen mit der im Flüssigkeitsabscheider befindlichen Flüssigkeit abgesaugt. Das Absaugen des Öls, das üblicherweise von damit beauftragten Dritten ausgeführt wird, ist aufgrund der relativ teuren Saugvorrichtung sehr kostenintensiv. Darüber hinaus ist es sehr zeitaufwendig, wobei der Flüssigkeitsabscheider in dem Zeitraum zwischen dem Erreichen der vorbestimmten Dicke der Ölschicht und der Beendigung des Absaugens nicht genutzt werden kann, so daß relativ lange Totzeiten auftreten.

Um die Abführung bzw. Entsorgung der sich im Flüssigkeitsabscheider ansammelnden Ölschicht zu verbessern, ist vorgeschlagen worden, das Öl permanent oder periodisch in einen separaten, im Behälter des Flüssigkeitsabscheiders angeordneten Auffangbehälter abfließen zu lassen (DE 26 11 685 A1). Zu diesem Zweck ist in dem Behälter des Flüssigkeitsabscheiders genau in derjenigen Höhe, in der sich die Ölschicht einstellt, bzw. theoretisch einstellen wird, ein Abfluß vorgesehen, durch den das Öl abfließen kann.

Da jedoch die chemischen und physikalischen Eigenschaften der zu reinigenden Flüssigkeit sowie diejenigen der Verunreinigungen und insbesondere das Mengenverhältnis zwischen Verunreinigungen und der zu reinigenden Flüssigkeit je nach Einsatzgebiet des Flüssigkeitsabscheiders stark variieren, ist mittels eines in einer bestimmten Höhe installierten Abflusses eine gute Ableitung einer Verunreinigungsschicht nur in Ausnahmefällen zu erreichen. Des weiteren ist mit einem derartigen Abfluß der Nachteil verbunden, daß eine relativ große Menge der gereinigten oder zu reinigenden Flüssigkeit ebenfalls durch den Abfluß fließt, wodurch der separate Auffangbehälter relativ schnell gefüllt ist.

Aus DE 42 00 379 ist ebenfalls ein Abscheider bekannt, bei dem ein im wesentlichen geschlossener Auffangbehälter innerhalb des Flüssigkeitsabscheiders eingesetzt ist.

Obwohl aufgrund des eingesetzten Öl-Sammelbehälters kein zusätzlicher Bauraum für den Flüssigkeitsabscheider notwendig ist, ist mit dieser Konstruktion der Nachteil verbunden, daß der Sammelbehälter bei einer Überstauung der Anlage, beispielsweise durch einen Kanalrückstau, eine Verstopfung des Abflußkanals oder durch hohen Grundwasserstand, überflutet werden kann, wodurch in Sammelbehälter angesammelte, abgeschiedene Flüssigkeit aufsteigt und in das Kanalsystem gelangt.

Aus der US 25 85 878 ist es bekannt, die abgeschiedene Flüssigkeit mittels einer fest eingebauten Saugpumpe aus dem Flüssigkeitsabscheider in einen externen Öl-Sammelbehälter abzusaugen. Dabei kann der Einlaß der Saugleitung mittels eines Schwimmers auf der Flüssigkeit schwimmen. Ein derartiger externer Öl-Sammelbehälter benötigt jedoch zusätzlichen Bauraum.

Aus der EP 0 512 538 A1 sowie der US 40 89 784 ist es bekannt, in dem Flüssigkeitsabscheider eine fest installierte Fördervorrichtung in Form eines endlosen Transportbandes vorzusehen, das aus einem öl- bzw. benzinaufsaugenden Material besteht und zumindest teilweise in die abgeschiedene Flüssigkeit eintaucht. Durch Antrieb des Transportbandes kann die abgeschiedene vom Transportband aufgenommene Flüssigkeit nach oben nahe der Erdoberfläche transportiert werden. Dort wird die Flüssigkeit durch Quetschen oder Abstreifen aus dem Transportband herausgelöst und fließt in einen Öl-Sammelbehälter. Gemäß der EP 0 512 538 A1 ist der Öl-Sammelbehälter in dem Einstiegs- und Wartungsschacht angeordnet, so daß er von der Erdoberfläche aus zugänglich ist. Auf diese Weise ist jedoch das Fassungsvermögen des Öl-Sammelbehälters stark eingeschränkt, so daß er häufig geleert werden muß.

Bei der Vorrichtung gemäß der US 40 89 784 fließt die Flüssigkeit nach dem Herauslösen aus dem Transportband über eine Leitung in einen außerhalb des Flüssigkeitabscheiders gelagerten Öl-Sammelbehälter ab. Auf diese Weise ist zwar das Volumen des Öl-Sammelbehälters praktisch keinen Beschränkungen unterworfen, jedoch ist der für den Flüssigkeitsabscheider benötigte Bauraum dadurch wesentlich vergrößert.

Der Erfindung liegt die Aufgabe zugrunde, einen Flüssigkeitsabscheider zu schaffen, der trotz eines relativ großen Volumens des Auffangbehälters einen nur relativ geringen Bauraum benötigt und bei dem ein unbeabsichtigtes Austreten der abgeschiedenen Flüssigkeit aus dem Auffangbehälter zuverlässig verhindert ist.

Diese Aufgabe wird erfindungsgemäß durch die kennzeichnenden Merkmale des Anspruchs 1 gelöst.

Erfindungsgemäß ist der Auffangbehälter in dem Behälter des Flüssigkeitsabscheiders angeordnet. Auf diese Weise werden die Außenabmessungen des Flüssigkeitsabscheiders und somit der von diesem benötigte Bauraum durch den Auffangbehälter nicht vergrößert. Gleichzeitig ist das Fassungsvermögen des Auffangbehälters gegenüber den bekannten manuell zu entleerenden Öl-Behältern wesentlich vergrößert, so daß dessen Entleerung erst in größeren Zeitabständen notwendig ist.

Aufgrund des separaten Auffangbehälters in dem Behälter des Flüssigkeitsabscheiders kann die im Auffangbehälter gesammelte Flüssigkeit entfernt werden, ohne daß gleichzeitig der Betrieb des Flüssigkeitsabscheiders eingestellt werden muß. Vorzugsweise wird die im Auffangbehälter angesammelte Flüssigkeit in bekannter Weise abgesaugt oder in sonstiger geeigneter Weise aus dem Auffangbehälter abgelassen oder entfernt.

Um zuverlässig zu verhindern, daß der Auffangbehälter überläuft oder bei Überstauung der Anlage überflutet wird und somit die im Auffangbehälter angesammelte abgeschiedene Flüssigkeit wieder in die im Flüssigkeitsabscheider befindliche Flüssigkeit zurückfließt oder sich mit dieser vermischt, ist erfindungsgemäß vorgesehen, daß der Auffangbehälter im wesentlichen vollständig geschlossen ist und nur in seinem oberen Bereich eine Zulauföffnung aufweist. Dabei liegt die Zulauföffnung oberhalb des Flüssigkeitsspiegels des Flüssigkeitsabscheiders, so daß im normalen Betrieb ein Auslaufen von Flüssigkeit aus dem Auffangbehälter verhindert ist. Eine Umweltbelastung durch austretende Abscheiderflüssigkeit ist somit praktisch ausgeschlossen.

Erfindungsgemäß ist vorgesehen, daß die Zulauföffnung mit einem Zulaufstutzen versehen ist. Der Zulaufstutzen ist dicht an die Zulauföffnung des Auffangbehälters angeschlossen, so daß Flüssigkeit nur über die am freien Ende des Zulaufstutzen ausgebildete Eintrittsöffnung in den Auffangbehälter einfließen kann. Über die Anordnung und Ausbildung des Zulaufstutzens kann die Positionierung des Zulaufs des Auffangbehälters relativ zu der Fördervorrichtung verändert werden.

Vorzugsweise mündet das obere freie Ende des Zulaufstutzens in Höhe der Oberkante des Auffangbehälters oder oberhalb von diesen in der Eintrittsöffnung, womit der weitere Vorteil verbunden ist, daß der Abstand der Eintrittsöffnung des Zulaufstutzens von der Oberfläche der im Flüssigkeitsabscheider befindlichen Flüssigkeit gegebenenfalls vergrößert werden kann, wodurch die Betriebssicherheit erhöht ist.

Gemäß der Erfindung ist ebenfalls vorgesehen, daß die Zulauföffnung des Zulaufstutzens und/oder die Eintrittsöffnung des Auffangbehälters mit einer Verschlußvorrichtung verschließbar ist. Bei geschlossener Verschlußvorrichtung ist der Auffangbehälter vollständig abgedichtet, so daß Flüssigkeit weder ein- noch austreten kann. Dies ist insbesondere bei einem nicht planmäßigen Anstieg des Wasserspiegels im Flüssigkeitsabscheider notwendig, wie er beispielsweise bei einem Rückstau aus dem Kanalnetz, bei hydraulischer Überlastung der Anlage, bei Verstopfung der Anlage durch eindringende Fremdstoffe oder bei einer Koaleszenzmaterialverstopfung durch Schadstoffpartikel auftreten kann. Die Verschlußvorrichtung kann entweder an der Zulauföffnung des Auffangbehälters oder bei Anordnung eines Zulaufstutzens innerhalb von diesem oder am oberen freien Ende des Zulaufstutzens angeordnet sein. Im letzteren Fall ist die Verschlußvorrichtung vorteilhafterweise für etwaige Wartungs- oder Reparaturarbeiten in einfacher Weise zugänglich.

Die Verschlußvorrichtung schließt bei Erreichen eines vorbestimmten Flüssigkeitsstandes im Behälter des Flüssigkeitsabscheiders, so daß eine Verschlußautomatik gebildet ist, die die Zulauföffnung bzw. Eintrittsöffnung so lange wie möglich offen hält, nach Erreichen des vorbestimmten Flüssigkeitsstandes diese jedoch zuverlässig verschließt. Eine derartige Verschlußautomatik kann beispielsweise dadurch gebildet werden, daß die Verschlußvorrichtung eine schwenkbar gelagerte Verschlußklappe aufweist, die mit einem Schwimmer gekoppelt ist. Bei Ansteigen des Flüssigkeitsspiegels in dem Flüssigkeitsabscheider wird der Schwimmer angehoben, wodurch die Verschlußklappe in ihre Schließlage geschwenkt wird. Bei Absinken des Flüssigkeitsspiegels und somit des Schwimmers kann die Verschlußklappe wieder in ihre Offenstellung schwenken.

Alternativ oder zusätzlich zu der vorgenannten Verschlußvorrichtung, die bei Erreichen eines vorbestimmten Flüssigkeitsstandes im Behälter des Flüssigkeitsabscheiders schließt, kann im Auffangbehälter ein Ventil vorgesehen sein, das bei Erreichen eines vorbestimmten Flüssigkeitsstandes im Auffangbehälter schließt. Dieses Ventil kann mit einem im Auffangbehälter angeordneten Schwimmer gekoppelt sein. Auf diese Weise ist ein Austreten von abgeschiedener Flüssigkeit aus dem Auffangbehälter beispielsweise infolge Überfüllung zuverlässig vermieden. Statt eines mit einem Schwimmer gekoppelten Ventils kann auch ein in Einfüllrichtung öffnendes Rückschlagventil vorgesehen sein.

Vorzugsweise wird die sich an der Oberfläche ansammelnde abgeschiedene Flüssigkeit mittels einer Fördervorrichtung in den Auffangbehälter transportiert. Bei der Fördervorrichtung kann es sich beispielsweise um eine Saugpumpe oder ein eingangs beschriebenes saugfähiges Transportband handeln. In bevorzugter Ausgestaltung der Erfindung ist vorgesehen, daß die abgeschiedene Flüssigkeit mittels der Fördervorrichtung auf ein Niveau oberhalb des Ablaufs des Flüssigkeitsabscheiders angehoben wird und von dort über eine Leitung in den Auffangbehälter fließt. Die Leitung ist vorzugsweise fluiddicht ausgebildet, beispielsweise als Schlauch, insbesondere als Metallschlauch, und in fluiddichter Weise an den Auffangbehälter angeschlossen. Auf diese Weise ist erreicht, daß die abgeschiedene Flüssigkeit von dem mittels der Fördervorrichtung erreichten erhöhten Niveau in einen geschlossenen, gekapselten System bis in den Auffangbehälter fließt. Somit könnte bei einem Störfall nur dann Wasser in unbeabsichtigeter Weise in den Auffangbehälter fließen, wenn der Wasserstand in dem Flüssigkeitsabscheider bis auf das genannte Niveau oberhalb des Ablaufs ansteigt, von den aus die abgeschiedene Flüssigkeit in den Auffangbehälter fließt. Da jedoch vorher die Verschlußvorrichtung die Zulauföffnung und/oder die Eintrittsöffnung verschließt, ist eine sehr hohe Sicherheit gegenüber einer Unweltverschmutzung durch aus dem Auffangbehälter aufschwimmende abgeschiedene Flüssigkeit erreicht.

Der in dem Behälter des Flüssigkeitsabscheiders eingesetzte Auffangbehälter beeinträchtigt in gewissem Maße die Flüssigkeitsströmung im Behälter. Um diese Beeinträchtigung gering zu halten, kann vorgesehen sein, daß der Auffangbehälter über Stützen auf den Boden des Behälters des Flüssigkeitsabscheiders steht, so daß der Auffangbehälter nicht nur unströmt sondern auch unterströmt werden kann.

Obwohl der Auffangbehälter bei dem erfindungsgemäßen Flüssigkeitsabscheider ein relativ großes Fassungsvermögen aufweist, ist es in gewissen zeitlichen Intervallen notwendig, ihn zu entleeren. Dabei ist es jedoch ablauftechnisch vorteilhaft, den Auffangbehälter erst dann auszutauschen oder zu leeren, wenn er im wesentlichen vollständig gefüllt ist. Um den Füllungsstand des Auffangbehälters in einfacher Weise feststellen zu können, ist in vorteilhafter Weiterbildung der Erfindung eine Anzeigevorrichtung vorgesehen, mittels der der Füllungsgrad des Auffangbehälters festgestellt werden kann. Die Anzeigevorrichtung, bei der es sich um eine optische und/oder akustische Anzeigevorrichtung handeln kann, signalisiert einer Bedienperson, ob der Auffangbehälter bereits voll ist und geleert werden muß oder ob der Flüssigkeitsabscheider weiterhin betrieben werden kann.

Um ein Überschreiten eines vorbestimmten Füllungsgrades des Auffangbehälters zuverlässig vermeiden zu können, kann erfindungsgemäß eine Alarmvorrichtung vorgesehen sein, die die Bedienperson auf das Erreichen eines vorbestimmten Füllungsgrades in optischer und/oder akustischer Weise aufmerksam macht.

Um das Entleeren des Auffangbehälters zu erleichtern, kann in bevorzugter Ausgestaltung der Erfindung ein Steigrohr vorgesehen sein, das an seinem oberen Ende mit einer Saugvorrichtung koppelbar ist. Zum Entleeren des Auffangbehälters muß somit lediglich eine Pumpe oder eine ähnliche Saugvorrichtung an das obere Ende des Steigrohres angeschlossen werden. Während des Absaugens der abgeschiedenen Flüssigkeit aus dem Auffangbehälter kann der Flüssigkeitsabscheider weiter betrieben werden, so daß für diesen keine Totzeiten auftreten. Ein sicheres und annähernd vollständiges Entleeren des Auffangbehälters kann gewährleistet werden, wenn das untere Ende des Steigrohrs nahe dem Boden des Auffangbehälters angeordnet ist. Darüber hinaus ist eine einfache Zugänglichkeit des Steigrohrs von der Erdoberfläche erreicht, wenn das obere Ende des Steigrohrs nahe der Erdoberfläche angeordnet ist.

Um den sich am Boden des Behälters des Flüssigkeitsabscheiders absetzenden Schlamm kontinuierlich entfernen zu können, ist vorzugsweise vorgesehen, daß in dem Behälter des Flüssigkeitsabscheiders eine Schlammpumpe mit einer zu einem externen Speicher führenden Pumpenleitung angeordnet ist.

Nachstehend ist die Erfindung anhand eines in der Zeichnung wiedergegebenen Ausführungsbeispiels beschrieben. Es zeigen:
- Figur 1: einen Schnitt durch einen erfindungsgemäßen Flüssigkeitsabscheider und
- Figur 2: eine Aufsicht auf den Flüssigkeitsabscheider gemäß Figur 1.

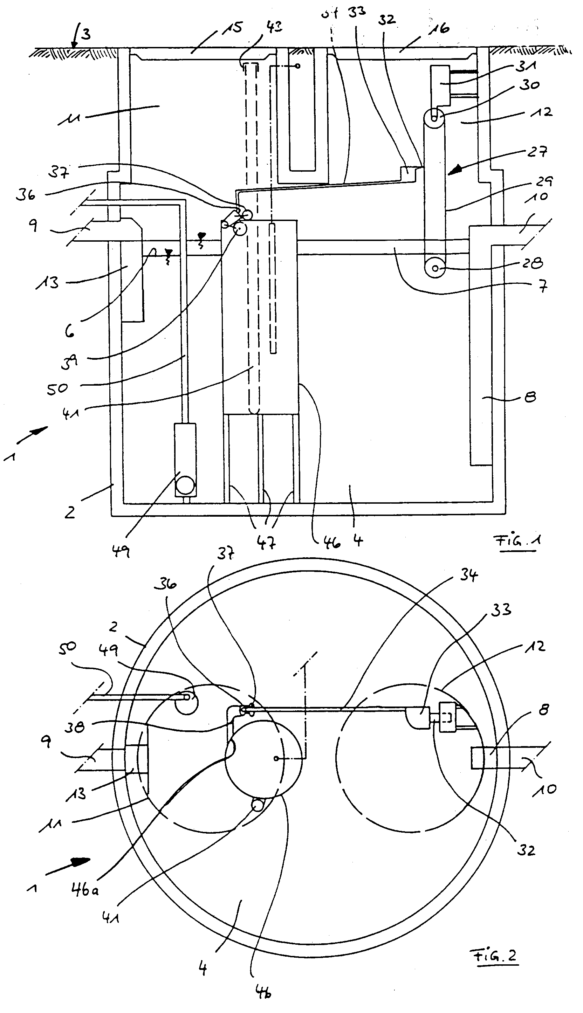

Der in den Figuren 1 und 2 dargestellte Flüssigkeitsabscheider 1 weist einen Behälter 2 auf, der in seinem oberen Bereich mit einen Einlauf 9 sowie an der gegenüberliegenden Seite mit einem Ablauf 10 versehen ist. Am Einlauf 9 des Behälters 2 ist eine Einlaufschikane 13 angeordnet, die einen nach unten offenen, kurzen Schacht bildet und mittels der das über den Einlauf 9 zuströmende Flüssigkeitsgemisch nach unten in die Tiefe des Behälters 2 umgelenkt wird. Das Flüssigkeitsgemisch durchströmt einen an den Einlauf 9 anschließenden Abscheiderbereich 4, in dem ein großer Teil der abgeschiedenen Flüssigkeit nach dem Schwerkraftprinzip getrennt wird. Die leichte Flüssigkeitströpfchen haben ausreichend Zeit, um in beruhigter Strömung aufzusteigen und sich durch Anlagerung zu vergrößern. Die abgeschiedene Flüssigkeit sammelt sich an der Oberfläche 6 der zu reinigenden Flüssigkeit zu einer Schicht 7, während die gereinigte Flüssigkeit den Behälter 2 über einen aufsteigenden Ablaufschacht 8 und den Ablauf 10 verläßt.

Gegebenenfalls kann in nicht dargestellter Weise in den Behälter 2 des Flüssigkeitsabscheiders 1 ein separater Behälter mit einem integrierten Öl- und/oder Koaleszenzabscheider vorgesehen sein, den die zu reinigende Flüssigkeit durchströmen muß, bevor sie über den Ablauf 10 abfließt. Unmittelbar vor dem Ablauf kann darüber hinaus eine Probenentnahmevorrichtung bekannten Aufbaus vorgesehen sein.

Wie in Figur 1 angedeutet ist, ist der Flüssigkeitsabscheider 1 im Erdreich unterhalb der Erdoberfläche 3 angeordnet. Der Behälter 2 weist an seiner Oberseite zwei Schächte 11 und 12 auf, die an der Erdoberfläche 3 münden und über den der Behälter 2 bzw. der Flüssigkeitsabscheider 1 zugänglich ist. Um einerseits einen ständigen Zugang zu den Schächten 11 und 12 zu ermöglichen und um andererseits das Eindringen von Verunreinigungen in die Schächte und somit den Abscheiderbereich 4 des Behälters 2 zuverlässig zu vermeiden, sind die Schächte 11 und 12 an ihrem jeweils oberen Ende mit einer lösbaren Schachtabdeckung 15 bzw. 16 versehen. Die Abdeckung kann beispielsweise ein Klappdeckel sein.

Innerhalb des einen Schachtes 12 ist eine im wesentlichen vertikal verlaufende Fördervorrichtung 27 angeordnet. Die Fördervorrichtung 27 umfaßt eine obere Rolle 30 sowie eine untere Rolle 28, die im wesentlichen vertikal unterhalb der oberen Rolle 30 angeordnet ist und in die Flüssigkeit im Behälter 2 bzw. in die Schicht 7 der abgeschiedenen Flüssigkeit eintaucht. Die obere Rolle 30 ist mittels einer Antriebsvorrichtung 31 angetrieben.

Über die beiden Rollen 28 und 30 verläuft ein Endlosband 29, das aus einem öl- bzw. benzinaufsaugenden Gewebematerial besteht und im Bereich der unteren Rolle 28 durch die Schicht 7 der abgeschiedenen Flüssigkeit geführt ist. Wenn die Fördervorichtung 27 mittels der Antriebsvorrichtung 31 in Betrieb gesetzt wird, wird die abgeschiedene Flüssigkeit beim Eintreten bzw. Austreten des Endlosbandes 29 in die bzw. aus der Schicht 7 von dem Endlosband 29 aufgenommen und gemäß Figur 1 vertikal nach oben bis auf ein Niveau nahe der Erdoberfläche 3 und oberhalb des Ablaufs 10 transportiert. In Bereich der oberen Rolle 30 wird die vom Endlosband 29 transportierte abgeschiedene Flüssigkeit mittels eines Abstreifers 32 oder einer anderen Abgabevorrichtung von den Endlosband 29 abgenommen und über ein Trichtergefäß 33 einer Ablaufleitung 34 zugeführt. Als Ablaufleitung 34 findet vorzugsweise ein fluiddichter Schlauch, insbesondere Metallschlauch Verwendung.

Unterhalb des weiteren Schachtes 11 ist ein zylindrischer Auffangbehälter 46 über Stützen 47 auf dem Boden des Behälters 2 des Flüssigkeitsabscheiders aufgeständert. Der Auffangbehälter 46 ist gegenüber der Flüssigkeit, in die er eintaucht, vollständig abgedichtet. Im Bereich seines oberen Endes weist der Auffangbehälter 46 eine Zulauföffnung 46a auf, auf die ein Zulaufstutzen 38 dicht aufgesetzt ist. Am freien Ende des Zulaufstutzens 38 ist eine Eintrittsöffnung 36 ausgebildet, auf die das Ende der Ablaufleitung 34 fluiddicht aufgesetzt ist. Die von der Fördervorrichtung 27 aus den Behälter 2 entnommene und über den Abstreifer 32 in die Ablaufleitung 34 gelangende abgeschiedene Flüssigkeit fließt über die Ablaufleitung 34 in die Eintrittsöffnung 36 des Einlaufstutzens 38 und durch diesen in den Auffangbehälter 46, in dem sie gesammelt wird.

In dem Zulaufstutzen 38 nahe der Eintrittsöffnung 36 ist eine Ventilvorrichtung 37 vorgesehen, die mit einem Schwimmer 39 gekoppelt ist. Bei Ansteigen des Flüssigkeitsspiegels in dem Flüssigkeitsabscheider 1 wird der Schwimmer 39 angehoben, wodurch die Ventilvorrichtung 37 in ihre Schließlage geschwenkt wird, in der sie die Eintrittsöffnung 36 des Zulaufstutzens 38 dicht verschließt. Auf diese Weise ist der Auffangbehälter 46 vollständig verschlossen, so daß Flüssigkeit weder ein- noch austreten kann. Dies ist insbesondere bei einem außerplanmäßigen Anstieg des Flüssigkeitsspiegels im Flüssigkeitsabscheider sinnvoll.

In dem Zulaufstutzen 38 ist eine weitere Ventilvorrichtung 51 vorgesehen, die mit einem Schwimmer 52 gekoppelt ist, der innerhalb des Auffangbehälters 46 angeordnet ist. Wenn der Flüssigkeitsspiegel in dem Auffangbehälter 46 ansteigt, wird der Schwimmer 52 angehoben, wodurch die Ventilvorrichtung 51 schließt und einen Austritt der Flüssigkeit aus den Auffangbehälter 46 verhindert.

Der Auffangbehälter 46 ist mit einem vom Boden des Auffangbehälters 46 bis etwa zur Erdoberfläche 3 reichenden Steigrohr 41 versehen, das an seinem oberen Ende mit einer Saugvorrichtung, beispielsweise einer Pumpe koppelbar ist. Wenn keine Saugvorrichtung an das Steigrohr 41 angeschlossen ist, ist die obere Öffnung des Steigrohrs 41 durch eine Verschlußkappe 43 bedeckt.

In dem Auffangbehälter 46 ist darüber hinaus eine Füllstandsmeßsonde 44 angeordnet, die über eine elektrische Leitung 45 mit einer nicht dargestellten Anzeigevorrichtung verbunden ist. Auf diese Weise ist auch von der Erdoberfläche 3 aus jederzeit der Füllungsgrad des Auffangbehälters 46 erfaßbar.

Um den sich am Boden des Behälters absetzenden Schlamm kontinuierlich aus diesem entfernen zu können, ist eine Schlammpumpe (49) mit einen bodennah im Behälter angeordneten Einlaß sowie einer aus dem Behälter 2 herausführenden Pumpenleitung 50 vorgesehen. Die Pumpenleitung 50 führt zu einem oberirdischen Schlammtrockungsbehälter, von dem aus das vom Schlamm durch Filtern gereinigte Abwasser wieder über die normale Zulaufleitung in den Flüssigkeitsabscheider zurückläuft.

Wie der Figur 2 zu entnehmen ist, ist der Auffangbehälter 46 durch den Schacht 11 von der Erdoberfläche 3 aus zugänglich, so daß gegebenenfalls Wartungs- und Reparaturarbeiten in einfacher Weise durchgeführt werden können.

## Patentansprüche

1. Flüssigkeitsabscheider, insbesondere zum Trennen von Gemischen aus Wasser und spezifisch leichteren Flüssigkeiten wie Öl, Benzin oder dergleichen, mit einem Behälter (2), der einen Einlauf (9) und einen Ablauf (10) aufweist, einem im Flüssigkeitsabscheider ausgebildeten Abscheiderbereich und einem die im Abscheiderbereich abgeschiedene Flüssigkeit aufnehmenden Auffangbehälter (46), der in dem Behälter (2) des Flüssigkeitsabscheiders angeordnet ist, dadurch gekennzeichnet, daß der Auffangbehälter (46) im wesentlichen vollständig geschlossen ist und in seinem oberen Bereich einen Zulauf (36, 38, 46a) aufweist, der mit einer Verschlußvorrichtung (37, 39) verschließbar ist, die bei Erreichen eines vorbestimmten Flüssigkeitsstandes im Behälter (2) des Flüssigkeitsabscheiders (1) schließt.

2. Flüssigkeitsabscheider nach Anspruch 1, dadurch gekennzeichnet, daß der Zulauf einen Zulaufstutzen (38) aufweist, der an eine Zulauföffnung (46a) des Behälters (46) angeschlossen ist und am oberen freien Ende eine Eintrittsöffnung (36) besitzt.

3. Flüssigkeitsabscheider nach Anspruch 2, dadurch gekennzeichnet, daß das obere freie Ende des Zulaufstutzens (38) in Höhe der Oberkante des Auffangbehälters (46) oder oberhalb von diesem in der Eintrittsöffnung (36) mündet.

4. Flüssigkeitsabscheider nach einem der Ansprüche 1 bis 3, dadurch gekennzeichnet, daß die Verschlußvorrichtung eine schwenkbar gelagerte Verschlußkappe (37) aufweist, die mit einem Schwimmer (39) gekoppelt ist.

5. Flüssigkeitsabscheider nach einem der Ansprüche 1 bis 4, dadurch gekennzeichnet, daß die Verschlußvorrichtung am oberen freien Ende des Zulaufstutzens (38) angeordnet ist.

6. Flüssigkeitsabscheider nach einem der Ansprüche 4 bis 5, dadurch gekennzeichnet, daß die Verschlußvorrichtung des weiteren ein Ventil umfaßt, das bei Erreichen eines vorbestimmten Flüssigkeitsstandes im Auffangbehälter (46) schließt.

7. Flüssigkeitsabscheider nach einem der Ansprüche 1 bis 6, gekennzeichnet durch eine Fördervorrichtung, mittels der die im Abscheiderbereich abgeschiedene Flüssigkeit dem Auffangbehälter (46) zuführbar ist.

8. Flüssigkeitsabscheider nach Anspruch 7, dadurch gekennzeichnet, daß die Fördereinrichtung eine Pumpe oder ein Transportband ist.

9. Flüssigkeitsabscheider nach Anspruch 7 oder 8, dadurch gekennzeichnet, daß die abgeschiedene Flüssigkeit mittels der Fördereinrichtung (27) auf ein Niveau oberhalb des Ablaufs (10) des Flüssigkeitsabscheiders angehoben wird und von dort über eine Leitung (34) in den Auffangbehälter fließt.

10. Flüssigkeitsabscheider nach Anspruch 9, dadurch gekennzeichnet, daß die Leitung (34) fluiddicht ist und in fluiddichter Weise an den Auffangbehälter (46) angeschlossen ist.

11. Flüssigkeitsabscheider nach Anspruch 12, dadurch gekennzeichnet, daß die Leitung ein Schlauch, vorzugsweise ein Metallschlauch ist.

12. Flüssigkeitsabscheider nach einem der Ansprüche 1 bis 11, dadurch gekennzeichnet, daß der Auffangbehälter (46) über Stützen (47) auf dem Boden des Behälters (2) des Flüssigkeitsabscheiders (1) steht.

13. Flüssigkeitsabscheider nach einem der Ansprüche 1 bis 12, gekennzeichnet durch eine Anzeigevorrichtung, mittels der der Füllungsgrad des Auffangbehälters (46) erfaßbar ist.

14. Flüssigkeitsabscheider nach einem der Ansprüche 1 bis 13, gekennzeichnet durch eine Alarmvorrichtung, mittels der das Überschreiten eines vorbestimmten Füllungsgrades des Auffangbehälters (46) anzeigbar ist.

15. Flüssigkeitsabscheider nach einem der Ansprüche 1 bis 14, dadurch gekennzeichnet, daß der Auffangbehälter (46) ein Steigrohr (41) aufweist, das an seinem oberen Ende mit einer Saugvorrichtung koppelbar ist.

16. Flüssigkeitsabscheider nach Anspruch 15, dadurch gekennzeichnet, daß das untere Ende des Steigrohrs (41) nahe dem Boden des Auffangbehälters (46) angeordnet ist.

17. Flüssigkeitsabscheider nach Anspruch 15 oder 16, dadurch gekennzeichnet, daß das obere Ende des Steigrohrs (41) nahe der Erdoberfläche (3) angeordnet ist.

18. Flüssigkeitsabscheider nach einem der Ansprüche 1 bis 17, dadurch gekennzeichnet, daß in dem Behälter (2) des Flüssigkeitsabscheiders (1) eine Schlammpumpe (49) mit einer zu einem externen Speicher führenden Pumpenleitung (50) angeordnet ist.

## Claims

1. Liquid separator, particularly for separating mixtures of water and specifically lighter liquid such as oil, petrol, etc., having a container (2), which has an inlet (9) and an outlet (10), a separator area formed in the liquid separator and a receiver (46) receiving the liquid separated in the separator area and which is positioned in the liquid separator container (2), characterized in that the receiver (46) is substantially completely closed and has in its upper region a feed (36, 38, 46a), which can be closed with a closing device (37, 39) and which closes on reaching a predetermined liquid level in the container (2) of the liquid separator (1).

2. Liquid separator according to claim 1, characterized in that the feed has a feed connection (38), which is connected to a feed opening (46a) of the receiver (46) and has at the upper, free end an intake (36).

3. Liquid separator according to claims 2, characterized in that the upper, free end of the feed connection (38) issues, level with the upper edge of the receiver (46) or above the latter, into the intake (36).

4. Liquid separator according to one of the claims 1 to 3, characterized in that the closing device has a pivotably mounted hinged cover (37), which is coupled to a float (39).

5. Liquid separator according to one of the claims 1 to 4, characterized in that the closing device is located at the upper, free end of the feed connection (38).

6. Liquid separator according to either of the claims 4 and 5, characterized in that the closing device also has a valve, which closes on reaching a predetermined liquid level in the receiver (46).

7. Liquid separator according to one of the claims 1 to 6, characterized by a conveying means by means of which the liquid separated in the separator area can be supplied to the receiver (46).

8. Liquid separator according to claim 7, characterized in that the conveying means is a pump or a conveyor belt.

9. Liquid separator according to claim 7 or 8, characterized in that the separated liquid is raised by means of the conveying means (27) to a level above the outlet (10) of the liquid separator and flows from there, via a line (34) into the receiver.

10. Liquid separator according to claim 9, characterized in that the line (34) is fluid-tight and is connected in fluid-tight manner to the receiver (46).

11. Liquid separator according to claim 12, characterized in that the line is a hose, preferably a metal hose.

12. Liquid separator according to one of the claims 1 to 11, characterized in that the receiver (46) stands by means of supports (47) on the bottom of the container (2) of the liquid separator (1).

13. Liquid separator according to one of the claims 1 to 12, characterized by an indicator, by means of which the filling level of the receiver (46) can be established.

14. Liquid separator according to one of the claims 1 to 13, characterized by an alarm, by means of which it is possible to indicate the passing beyond a predetermined filling level of the receiver (46).

15. Liquid separator according to one of the claims 1 to 14, characterized in that the receiver (46) has a riser (41), whose upper end can be coupled to a suction device.

16. Liquid separator according to claim 15, characterized in that the lower end of the riser (41) is positioned close to the bottom of the receiver (46).

17. Liquid separator according to claim 15 or 16, characterized in that the upper end of the riser (41) is close to the ground plane (3).

18. Liquid separator according to one of the claims 1 to 17, characterized in that the container (2) of the liquid separator (1) contains a sludge pump (49) with a pump line (50) leading to an external storage means.

## Revendications

1. Séparateur de liquide, notamment pour séparer des mélanges d'eau et de liquides de plus faible densité tels que de l'huile, de l'essence ou analogue, comportant un récipient (2), qui présente une entrée (9) et une sortie d'écoulement (10), une zone de séparation conformée dans le séparateur de liquide et un récipient collecteur (46) recevant le liquide séparé dans la zone de séparation, ce récipient collecteur (46) étant disposé dans le récipient (2) du séparateur de liquide, caractérisé en ce que le récipient collecteur (46) est pratiquement entièrement fermé et présente dans sa partie supérieure une arrivée (36, 38, 46a) susceptible d'être obturée par un dispositif d'obturation (37, 39) qui se ferme lorsque le liquide atteint un niveau prédéterminé dans le récipient (2) du séparateur de liquide (1).

2. Séparateur de liquide selon la revendication 1, caractérisé en ce que l'arrivée présente une tubulure d'admission (38) connectée à un orifice d'arrivée (46a) du récipient (46) et comporte à son extrémité supérieure libre un orifice d'entrée (36).

3. Séparateur de liquide selon la revendication 2, caractérisé en ce que l'extrémité supérieure libre de la tubulure d'admission (38) débouche dans l'orifice d'entrée (36) à la hauteur de l'arête supérieure du récipient collecteur (46) ou au-dessus de celui-ci.

4. Séparateur de liquide selon l'une des revendications 1 à 3, caractérisé en ce que le dispositif d'obturation présente un capuchon d'obturation articulé pivotant (37) couplé à un flotteur (39).

5. Séparateur de liquide selon l'une des revendications 1 à 4, caractérisé en ce que le dispositif d'obturation est disposé à l'extrémité supérieure libre de la tubulure d'admission (38).

6. Séparateur de liquide selon l'une des revendications 4 à 5, caractérisé en ce que le dispositif d'obturation comprend en outre un clapet qui se ferme lorsque le liquide atteint un niveau prédéterminé dans le récipient collecteur (46).

7. Séparateur de liquide selon l'une des revendications 1 à 6, caractérisé par un dispositif de transport au moyen duquel le liquide séparé dans la zone de séparation est susceptible d'être amené dans le récipient collecteur (46).

8. Séparateur de liquide selon la revendication 7, caractérisé en ce que le dispositif de transport est une pompe ou une bande transporteuse.

9. Séparateur de liquide selon l'une des revendications 7 ou 8, caractérisé en ce que le liquide séparé est élevé au moyen du dispositif de transport (27) à un niveau au-dessus de la sortie d'écoulement (10) du séparateur de liquide et de là s'écoule dans le récipient collecteur (46) par l'intermédiaire d'une conduite (34).

10. Séparateur de liquide selon la revendication 9, caractérisé en ce que la conduite (34) est étanche aux fluides et est connectée au récipient collecteur (46) de manière étanche aux fluides.

11. Séparateur de liquide selon la revendication 10, caractérisé en ce que la conduite est un tuyau, de préférence un tuyau métallique.

12. Séparateur de liquide selon l'une des revendications 1 à 11, caractérisé en ce que le récipient collecteur (46) est posé sur le fond du récipient (2) du séparateur de liquide (1) par l'intermédiaire de montants (47).

13. Séparateur de liquide selon l'une des revendications 1 à 12, caractérisé par un dispositif indicateur, au moyen duquel le degré de remplissage du récipient collecteur (46) peut être détecté.

14. Séparateur de liquide selon l'une des revendications 1 à 13, caractérisé par un dispositif d'alarme, au moyen duquel le dépassement d'un degré de remplissage prédéterminé du récipient collecteur (46) peut être indiqué.

15. Séparateur de liquide selon l'une des revendications 1 à 14, caractérisé en ce que le récipient collecteur (46) présente un tube montant (41) susceptible d'être connecté à son extrémité supérieure à un dispositif d'aspiration.

16. Séparateur de liquide selon la revendication 15, caractérisé en ce que l'extrémité inférieure du tube montant (41) est disposée à proximité du fond du récipient collecteur (46).

17. Séparateur de liquide selon l'une des revendications 15 ou 16, caractérisé en ce que l'extrémité supérieure du tube montant (41) est disposée à proximité de la surface du sol (3).

18. Séparateur de liquide selon l'une des revendications 1 à 17, caractérisé en ce qu'une pompe à boue (49), comportant une conduite (50) qui conduit à un réservoir externe, est disposée dans le récipient (2) du séparateur de liquide (1).
